# EUROPÄISCHE PATENTSCHRIFT

(11) **EP 0 136 411 B1**
(45) Veröffentlichungstag und Bekanntmachung des Hinweises auf die Patenterteilung: **14.01.1987**
(21) Anmeldenummer: 84107375.2
(22) Anmeldetag: 27.06.1984
(51) Int. Cl.: C08G 59/42, C08G 59/14, C09D 3/58, C09D 5/44

(54) **Hitzehärtbare Bindemittelmischung**
Heat-curable binder composition
Composition de liant thermodurcissable

(30) Priorität: 05.07.1983 DE 3324211
(43) Veröffentlichungstag der Anmeldung: 10.04.1985
(73) Patentinhaber: BASF Lacke + Farben AG, 48165 Münster-Hiltrup (DE)
(72) Erfinder: Batzill, Wolfgang, Dipl.-Chem., D-4400 Münster (DE); Dobbelstein, Arnold, Dipl.-Chem., D-4400 Münster (DE); Geist, Michael, Dipl.-Chem., D-4400 Münster (DE); Ott, Günther, Dipl.-Chem., D-4400 Münster (DE)
(74) Vertreter: Habbel, Hans-Georg, Dipl.-Ing.

## Beschreibung

Die Erfindung betrifft eine hitzehärtbare Bindemittelmischung auf Basis eines Hydroxylgruppen enthaltenden organischen Harzes.

Zur Härtung durch Vernetzung der Bindemittel in Lackfilmen wurden vielerlei chemische Reaktionen vorgeschlagen und auch eingesetzt. Die während der Vernetzungsreaktion entstehenden chemischen Bindungen genügen häufig nicht allen Anforderungen, die an die Lackfilme gestellt werden.

Bei 2-Komponenten-Systemen muß man oft eine der reaktiven Gruppen verkappen, um eine frühzeitige Reaktion zu unterbinden. Die während des Einbrennens dann freiwerdenden Verbindungen belasten, insbesondere im Falle von Aminen oder Phenolen, die Umwelt.

Für die Grundierung von elektrisch leitfähigen Substraten hat in den letzten Jahren die Elektrotauchlackierung weite Verbreitung gefunden. Im Vordergrund stand bisher die anodische Elektrotauchgrundierung. Die hierfür eingesetzten Harzbindemittel gehören zu den Carboxylgruppen enthaltenden Harzen, z.B. zu den Maleinatölen, maleinisierten Epoxidharzen, Alkydharzen, Acrylharzen und insbesondere zu den maleinisierten Polybutadienen. Durch Salzbildung, vornehmlich mit Aminen, wurden diese Harze wasserlöslich gemacht und an der Anode im Elektrotauchbad durch den Strom abgeschieden. Das anodische Elektrotauchgrundierungsverfahren enthält jedoch schwerwiegende Nachteile. So wird während der elektrischen Abscheidung an der Anode Sauerstoff entwickelt, der die sich an der Anode abscheidenden Harze in schwerwiegender, nachteiliger Art und Weise verändern kann. Desweiteren gehen an der Anode Metallionen in Lösung, die im eingebrannten Film als Störstellen enthalten sind. Die Metallionen können zur Verfärbung und Fleckenbildung führen. Qualitative Nachteile verursachen sie insbesondere durch Salzbildung und damit durch Herabsetzung der Wasserfestigkeit und des Korrosionsschutzes.

Das in den letzten Jahren zur Marktreife entwickelte kathodische Elektrotauchgrundierverfahren verdrängt in zunehmendem Maße das anodische Verfahren, da die oben beschriebenen Mängel weitgehend vermieden werden. So bildet sich an der Kathode an der nun der Lackfilm abgeschieden wird, während des Abscheidevorganges Wasserstoff, der das Harzbindemittel nicht beeinflußt. Da im annähernd neutralen pH-Bereich die kathodische Abscheidund erfolgen kann, gehen kaum Metallionen in Lösung. Die für die kathodische Abscheidung geeigneten Bindemittel enthalten überwiegend Aminogruppen, die zur Wasserlöslichmachung mit Säuren neutralisiert werden.

Aus der EP 12463 B 1 sind Bindemittel bekannt, die durch die Umesterung von p-Hydroxyalkylestergruppen enthaltenden Vernetzungsmitteln mit hydroxylgruppenhaltigen harzartigen Verbindungen vernetzen. Diese Umesterung erfordert jedoch große Mengen an Schwermetallsalzen als Härtungskatalysatoren.

Hitzehärtbare Bindemittelmischungen, die "Michael-Additionsprodukte" als Vernetzer enthalten, sind in der DE-PS 2 934 485 beschrieben. Die dort beanspruchten "Michael-Additionsprodukte" stellen thermisch labile Addukte sekundärer oder primärer Amine an aktivierte Doppelbindungen dar, aus denen unter den Härtungsbedingungen die aktivierten Doppelbindungen wieder freigelegt werden, die wiederum Ourch nachfolgende "Michael-Addition" mit den reaktiven Aminogruppen eines beigemengten Polyaminharzes die Härtung der Überzugsmasse bewirken. Es findet also ein "Michael-Austausch" statt, bei dem die ursprünglich zur Blockierung der aktivierten Doppelbindungen herangezogenen primären oder sekundären Amine je nach ihrer Flüchtigkeit entweder in freier Form als basische Störstellen im Film verbleiben oder emittiert werden und damit zur Belastung der Umwelt führen.

Es ist die Aufgabe der Erfindung, diese Nachteile des Standes der Technik zu vermeiden und eine Bindemittelmischung zur Herstellung von Überzugsmitteln zu schaffen, deren Komponenten eine erhöhte Reaktivität aufweisen. Durch die erfindungsgemäße Bindemittelmischung soll die Umweltbelastung bei der Applikation der entsprechenden Überzugsmittel herabgesetzt werden. Die Überzugsmittel auf Basis der erfindungsgemäßen Bindemittelmischung sollen ferner für alle Arten von Applikationsverfahren geeignet sein, d.h. die Bindemittelmischung soll für konventionell zu applizierende Einbrennlacke, für Pulverlacke und für wäßrige Pulverslurries verwendet werden können. Nach Einbau von solubilisierenden Gruppen soll die Bindemittelmischung für das Elektrotauchlackierverfahren geeignet sein.

Diese Aufgabe wird bei einer Bindemittelmischung der eingangs genannten Art erfindungsgemäß dadurch gelöst, daß sie
A) ein organisches Harz mit einem Hydroxylgruppengehalt von wenigstens 0,2 Äquivalent in 100 g Harz und
B) ein Vernetzungsmittel auf der Basis von Michael-Addukten CH-acider, enolisierbarer Carbonsäureester en organische Materialien mit a, β - ethylenisch ungesättigten Molekülanteilen, die in Konjugation zu einer Carbonylgruppe oder einer carbonylanalogen Gruppe stehen,

enthält.

Die Bindemittelmischung enthält vorteilhaft zusätzlich zu den Komponenten A und B als Komponente C Pigmente, Füllstoffe, Vernetzungskatalysatoren, Korrosionsschutzinhibitoren und weitere Lackhilfsmittel.

Vorteilhaft beträgt der Anteil der Komponente A 50-95 Gew.-% und der der Komponente B 5 - 50 Gew.-%, wobei die Summe der Komponenten A und B 100 % beträgt.

Die erfindungsgemäßen Bindemittelmischungen ergeben nach dem Einbrennen glänzende glattverlaufende Filme mit sehr guter Lösungsmittelbeständigkeit und zeigen auf damit beschichteten Eisenmetall-Substraten einen ausgezeichneten Korrosionsschutz.

Während bei den in der DE-P8 2 934 485 beschriebenen Additionsprodukten von primären oder sekundären Aminen an aktivierte Doppelbindungen eine thermisbhe Rückspaltung dieser β-Alanin-Derivate diskutiert wird und die dortige Lehre zum Handeln zwingend michaelreaktionsfähige Aminogruppen in der zweiten Harzkomponente als vernetzungsnotwendig vorschreibt, genügt bei den Michaeladdukt-haltigen Vernetzungsmitteln gemäß der hier beschriebenen Erfindung die alleinige Existenz von Hydroxylgruppen in der zweiten Harzkomponente, um eine vorzügliche Lösungsmittelbebeständigkeit zu erzielen.

Auch die klassische Michael-Addition als nucleophile Additon von Verbindungen mit aktiven Methylengruppen an aktivierte Kohlenstoff-Kohlenstoff-Doppelbindungen, wie sie zum Aufbau der Vernetzungsmittel gemäß der vorliegenden Erfindung herangezogen wird, wird in der Fachliteratur (siehe E.D. Bergmann et al., The Michael Reaction, Org. Reactions 10, 179 ff. (1959) sowie Methodicum Chimicum, Band 5, S 671 ff. (1975)) als Gleichgewichtsreaktion bezeichnet. In diesem Falle wäre eine Härtungsreaktion dadurch erklärbar, daß der CH-acide Carbonsäureester durch eine Hydroxylgruppe der zweiten Harzkomponente substituiert wird. Der CH-acide Carbonsäureester wiederum weist aufgrund seiner polaren Gruppierungen eine geringe Flüchtigkeit auf und stellt an sich schon einen aktivierten Ester dar, der über eine Umesterungsreaktion an den Harzkörper gebunden würde.

In dem EP 4090 wiederum sind Kunstharzbindemittel für die kathodische Elektrotauchlackierung beschrieben, die Vernetzungsmittel mit endständigen Carboxylgruppen enthalten, von denen der Hauptanteil mit niedermolekularen Alkoholen verestert ist. Auch dort schreibt die Lehre zum Handeln primäre oder sekundäre Aminogruppen in der zweiten Harzkomponente vor, die gegenüber den veresterten Carboxylgruppen der ersten Komponente reaktionsfähig sind unter Ausbildung von nicht basischen Amidgruppen nach dem Reaktionsschema:

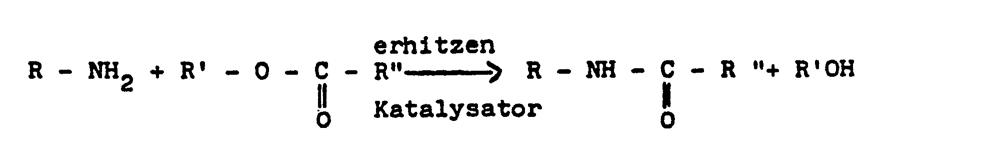

Im Falle einer Thermostabilität der über Michael-Adduktbildung hergestellten Vernetzungsmittel gemäß vorliegender Erfindung wären ebenfalls nur die endständigen Estergruppierungen des Vernetzungsmittels für die Härtung verantwortlich. Überraschenderweise ergibt sich aus der vorliegenden Erfindung, daß lediglich eine hinreichende Anzahl von reaktiven Hydroxylgruppen in der zweiten Harzkomponente erforderlich ist, um lösungsmittelbeständige Einbrennfilme zu erzielen.

Durch die Michael-Adduktbildung von CH-aciden Carbonsäureestern an ebenfalls durch elektronenziehende Substitutienten aktivierte Doppelbindungen sind also Vernetzungsmittel herstellbar, die gegenüber hydroxylgruppenhaltigen Harzen eine besonders stark ausgeprägte Vernetzungsaktivität aufweisen.

Der erfindungsgemäße Sachverhalt ist auch überraschend im Hinblick auf die EP 12 463 Bl. Die dort beschriebenen Bindemittel härten durch Umesterung von β-Hydroxyalkylestergruppen enthaltenden Vernetzungsmittel mit hydroxylgruppenhaltigen Harzen. Für die dort genannten esterhaltigen Vernetzungsmittel ist eine Aktivierung der Estergruppen durch einen 2-Hydroxy-Substituenten im Alkoholteil zwingend vorgeschrieben.

Die Komponente A der Bindemittelmischung weist vorteilhaft eine zahlenmittlere Molmasse von 850 bis 20 000 auf, vorzugsweise von 1000 bis 10 000. Insbesondere bei Verwendung der Bindemittelmischung für das Elektrotauchlackierverfahren enthält die Komponente A primäre und/oder sekundäre Aminogruppen zusätzlich zu den Hydroxylgruppen. Gegebenenfalls können zusätzlich auch tertiäre Aminogruppen und quartäre Ammoniumgruppen vorhanden sein.

Die Anwesenheit von geringen Anteilen an primären oder sekundären Aminogruppen neben den Hydroxylgruppen in der Komponente A ist unter dem Gesichtspunkt der Solubilisierung der Harze in wäßrigen Elektrotauchbädern von Bedeutung, da sie durch ihre stärker ausgeprägte Basisität eine verbesserte Lagerstabilität der kationischen Bindemitteldispersionen gewährleisten.

Bindemittelmischungen, deren Komponente A neben den Hydroxylgruppen gleichzeitig primäre und/oder sekundäre Aminogruppen enthält, stellen also eine besonders vorteilhafte Ausgestaltung der Erfindung dar. Das Einführen von primären und/oder sekundären Aminogruppen in das organische Harz zur Herstellung der Komponente A erfolgt vorzugsweise durch Reaktion eines Polyamins und/oder eines amino- und/oder hydroxylgruppenhaltigen Ketimins mit Harzen, die mindestens eine, vorzugsweise zwei Epoxidgruppen oder Isocyanatgruppen je Molekül enthalten.

Die Komponente A kann aber auch durch andere Anlagerungsreaktionen erhalten werden, z.B. durch Verestern oder Amidieren von primäre und/oder sekundäre Aminogruppen tragenden Verbindungen mit hierfür geeignete Gruppen enthaltenden Harze.

Als besonders geeignet für die Herstellung der Komponente A erweisen sich epoxidgruppenhaltige Harze mit vorzugsweise endständigen Epoxidgruppen aus der Gruppe der Polyglycidylether, Polyglycidylester und der Polyglycidylamine.

Andere vorteilhaft geeignete epoxidgruppenhaltige Harze sind Copolymerisate von Acrylsäure- und/oder Methacrylsäureglycidylester oder einer anderen, eine Glycidylgruppe tragenden, olefinisch ungesättigten, polymerisierbaren Verbindung mit Alkyl- und / oder Hydroxyalklylestern der Acryl- und / oder Methacrylsäure und / oder Vinylverbindungen wie Styrol, Vinyltoluol oder Vinylcarbazol.

Eine weitere bevorzugt geeignete Harzgruppe sind teilepoxidierte Polybutadienöle.

Unter Polyglycidylethernim Rahmen dieser Erfindung werden vorzugsweise solche Polyglycidylether der allgemeinen Formel 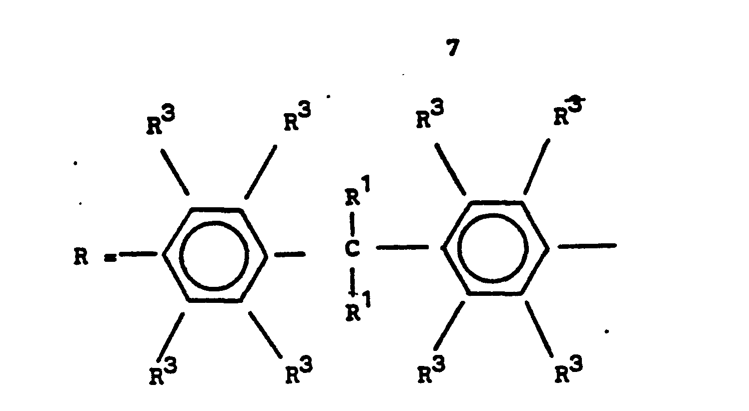
R1 = H oder CₙH_{2n + 1}
R3= Rl, Halogen und bevorzugt H
n - 0 bis 5

verstanden.

Die Polyglycidylether der aufgeführten allgemeinen Formel haben eine zahlenmittlere Molmasse von etwa 340 bis 5 000 und dementsprechend ein Epoxidäquivalentgewicht von 170 bis 2 500. Die Epoxidharze können auch hydriert oder teilhydriert eingesetzt werden. Zur Steuerung der Filmeigenschaften kann ein Teil der reaktionsfähigen Gruppen des Epoxidharzes mit anderen Verbindungen umgesetzt werden. Hierfür bieten sich an:
a) carboxylgruppenhaltige Verbindungen wie gesättigte oder ungesättigte Monocarbonsäuren (z.B. Benzoesäure, Leinölfettsäure, 2-Ethylhexansäure, Versaticsäure), aliphatische, cycloaliphatische und/oder aromatische Dicarbonsäuren verschiedener Kettenlängen (z.B. Adipinsäure, Sebacinsäure, Isophthalsäure oder dimere Fettsäuren), Hydroxyalkylcarbonsäuren (z.B. Milchsäure, Dimethylolpropionsäure) sowie carboxylgruppenhaltige Polyester oder
b) aminogruppenhaltige Verbindungen wie Diethylamin oder Ethylhexylamin oder Diamine mit sekundären Aminogruppen, wie z.B. N,N'-Dialkylalkylendiamin wie Dimethylethylendiamin, N,N-Dialkylpolyoxialkylendiamin wie N,N'-Dimethyl-polyoxipropylendiamin, Polyaminoamide wie Versamide mit zwei Molen Monoglycidylether oder Monoglycidylester, speziell Glycidylester a-verzweigter Fettsäuren wie der Versaticsäure, oder
c) hydroxylgruppenhaltige Verbindungen wie Neopentylglykol, bisethoxyliertes Neopentylglykol, Hydroxypivalinsäureneopentylglykolester, Hexandiol-1,6, Hexandiol-2,5, 1,4-Bis-(hydroxymethyl)-cyclohexan, 1,1- Isopropyliden-bis-(p-Phenoxy)-2-propanol, Trimethylolpropan, Pentaerythrit oder Aminoalkohole wie Triethanolamin, Methyldiethanolamin oder - hydroxylgruppenhaltige Alkylketimine wie Aminomethylpropandiol- 1,3-methyl-isobutylketimin sowie auch Polyglykolether, Polyesterpolyole, Polyetherpolyole, Polycaprolactonpolyole verschiedener Funktionalität und Molekulargewichte.

Anstelle der Polyglycidylether auf Basis Bisphenol A können auch Polyglycidylether auf Basis anderer Grundkomponenten wie Triglycidylisocyanurat, heterocyclische Diglycidylverbindungen oder Diglycidylhydantoine eingesetzt werden.

Als Polyglycidylester sind Umsetzungsprodukte von z.B. Terephthalsäurebisglycidylester oder Isophthalsäurebisglycidylester mit z.B. Bisphenol A geeignet. Das Epoxidäquivalentgewicht dieser Produkte liegt zwischen 200 bis 2 500. Zur Steuerung der Filmeigenschaften kann ein Teil der verbliebenen, reaktiven Glycidylgruppen mit anderen Verbindungen umgesetzt werden. Hierfür bieten sich die oben unter a, b und c genannten Verbindungen an.

Unter Polyglycidylaminen werden solche glycidylgruppenhaltigen Harze verstanden, die man durch Einführung von Glycidylgruppen über z.B. Epichlorhydrin in NH₂-funktionelle Harze erhält.

Bevorzugt geeignet sind auch Copolymerisate von Acryl- und/oder Methacrylsäureglycidylester oder einer anderen, eine Glycidylgruppe tragenden, olefinisch ungesättigten, polymerisierbaren Verbindung mit Estern der Acryl- und/oder Methacrylsäure sowie polymerisierbaren Vinylverbindungen, die eine zahlenmittlere Molmasse von 700 bis 10 000 und ein Epoxidäquivalentgewicht von 600 bis 3 000 aufweisen. Bevorzugt sind die Acrylsäureester mit C₂ bis C₈-Alkoholen und die Methacrylsäureester mit C, bis C₄-Alkoholen. Die Copolymerisate können weitere Monomere enthalten wie Hydroxyalkyl(meth)acrylat oder (Meth)-acrylamid. Die Copolymerisation erfolgt in wohlbekannter Weise durch Lösungs-, Suspensions- oder Emulsionspolymerisation mit Zusatz radikalischer Initiatoren wie Peroxiden, Hydroperoxiden, Perestern oder thermolabiler Azoverbindungen sowie gegebenenfalls Molekulargewichtsreglem.

Unter teilepoxidierten Polybutadienölen werden Umsetzungsprodukte verstanden, die durch Reaktion von handelsüblichen Polybutadienölen mit Persäuren bzw. organischen Säure-H₂0₂-Mischungen erhalten werden. Die Darstellungsmethode wird z.B. in der Chemiker-Zeitung 95,857 f. (1971) beschrieben.

Zur Herstellung wasserdispergierbarer Bindemittel werden die epoxidgruppenhaltigen Harze mit Polyaminen und oder einem amino- und / oder hydroxylgruppenhaltigen Ketimin umgesetzt. Wird die Anlagerung der primäre und sekundäre Aminogruppen tragenden Verbindungen in Form ihrer Ketimine durchgeführt, so sind die Reaktionsbedingungen so zu führen, daß im Reaktionsprodukt keine die Ketimine zersetzende Substanzen verbleiben. Bei den bevorzugten Ketiminen handelt es sich um Umsetzungsprodukte aus Ketonen und Hydroxyl- oder sek. Aminogruppen enthaltende Alkylaminen oder Alkyldiaminen mit der allgemeinen Struktur R - NH - R -NH₂ bzw. HO - R - NH₂. Die Ketimine weisen z.B. folgende Struktur auf: 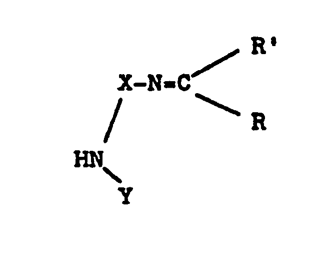 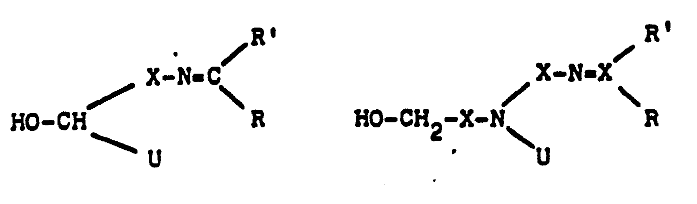 wobei bedeuten:
_{X -} -CR₂)ₙ-
R - -H, -R'
R' - -CₘH₂ₘ₊₁, -C₆H₁₁
U - -R,-Y
Y - -X-N = 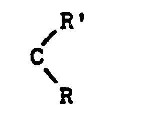
, X-OH, -R' oder -CH₂- 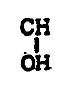
-CH₂-O-Z-R'
Z - C0, -X
n=1-6
m = 1-12

Die zur Reaktion mit den primären Aminogruppen eingesetzten Ketone sind im allgemeinen aliphatische Ketone wie Methylethylketon, Diethylketon, Methylisobutylketon, Ethyl-n-propylketon und cycloaliphatische Ketone wie Cyclopentanon und Cyclohexanon. Bei den bevorzugten Aminoalkylaminen und Alkanolaminen handelt es sich überwiegend um Diethylentriamin, N-Methyl-ethylendiamin, N-Methylpropylendiamin, N-Aminoethyl-piperazin, 2-Amino-ethanol, 1-Aminopropanol-2,1-Amionopropanol-3, 2-Amino-2-methyl-propanol-1, 3-Amino-2,2-dimethyl-propanol-1, 1,5-Diaminopentanot-3 oder N-(2-Aminoethyl)-N-(2-hydroxyethyl)-ethylendiamin.

Die exotherme Addition der oben beschriebenen Aminoketimine an die Epoxidgruppen des Basisharzes der Bindemittelkomponente A erfolgt im allgemeinen bei Raumtemperatur. Zur vollständigen Umsetzung wird die Reaktion häufig bei Temperaturen zwischen 50 und 125°C beendet.

Die Addition der Hydroxyketimine an die Epoxidgruppen des Basisharzes der Bindemittelkomponente A erfolgt in der Regel im gleichen Temperaturbereich, jedoch ist die Verwendung eines basischen Katalysators wie N,N-Dimethylbenzylamin oder auch eines Friedel-Crafts-Katalysators wie Zinn-II-Chlorid ratsam.

Die Einführung von reaktiven Hydroxylgruppen gelingt sehr leicht durch die Verwendung von sekundären Alkanolaminen wie Methylethanolamin, Diethanolamin, Diisopropanolamin, Butylethanolamin, Chyclohexylethanolamin und dgl.

Als Basisharz der Bindemittelkomponente A können auch Basisharze mit mindestens 2 Isocyanatgruppen eingesetzt werden. Bevorzugte Isocyanatgruppen enthaltende Harze sind höherfunktionelle Polyisocyanate, die durch Trimerisation oder Oligomerisation aus Diisocyanaten oder Polyisocyanaten und polyfunktionellen OH-oder NH-Gruppen enthaltenden Verbindungen dargestellt werden. Typische Isocyanate sind Toluylendiisocyanat, u Hexamethylendiisocyanat, 4,4'-Diphenylmethandiisocynant, 4,4'-Dicyclohexylmethandiisocyanat, 1,6-Diisocyanato-2,2,4-trimethylhexan und 1-lsocyanato-methyl-3-isocyanato-1,5,5-teimethyleyclohexan. Desweiteren können isocyanathaltige Präpolymere auf Basis von Polyglykolethern, Polyesterpolyolen, Polyetherpolyolen, Polycaprolactonpolyolen, Polycaprolactampolyolen oder Polyaminoamiden mit Vorteil eingesetzt werden. Als Komponente A können auch Polyester-, Acrylat-, Urethanacrylat- und Epoxidacrylatharze eingesetzt werden, sofern sie den geforderten Gehalt an reaktiven Hydroxylgruppen aufweisen. Das Vernetzungsmittel (B) der vorliegenden Erfindung ist ein Umsetzungsprodukt eines organischen Materials mit a, β - ethylenisch ungesättigten Molekülanteilen, die in Konjugation zu einer Carbonylgruppe oder einer carbonylanalogen Gruppe stehen, mit Carbonsäureestern, die an dem zur Carboxylgruppe a-ständigen Kohlenstoffatom aktiven Wasserstoff besitzen.

Das organische Material kann eine niedermolekulare Verbindung oder ein relativ hochmolekulares harzartiges Material sein. Entscheidend ist nur, daß es Struktureinheiten entsprechend den Formeln 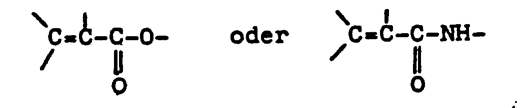 besitzt.

Die carbonylanaloge Gruppe kann auch eine Cyanogruppe sein. Beispiele für niedermolekulare Doppelbindungsträger dieser Art sind Acrylnitril und Methacrylnitril sowie die Vielzahl der auch für Radikalpolymerisationen eingesetzten Acrylsäure- und Methacrylsäureester sowie weiterhin Acrylamide und Methacrylamide.

Bevorzugt geeignete organische Materialien sind jedoch solche, die mehrere der obengenannten Sturktureinheiten enthalten.

Beispiele hierfür sind polyfunktionelle Acrylate oder Methacrylate mit mindestens zwei Gruppen der Formel 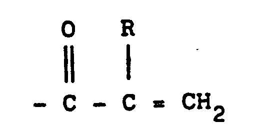 in der R Wasserstoff oder ein niedriger Alkylrest ist, zum Beispiel ein Methyl- oder ein Ethylrest. Die vorstehende Formel hängt an einem organischen Rest, bei dem es sich um einen Alkyl-, Aryl-, Alkaryl- oder einen polymeren Rest handeln kann.

Die bevorzugten polyfunktionellen Acrylate und Methacrylate, bei denen es sich also um Verbindungen handelt, die 2 oder mehrere Acrylat- beziehungsweise Methacrylatgruppen enthalten, erhält man durch Umsetzung von organischen Polyolen mit Acryl- oder Methacrylsäure. Beispiele von geeigneten Verbindungen dieser Art sind Ethylenglykoldiacrylat, 1,4-Butandioldimethacrylat, Bisphenol A - diacrylat, Diethylenglykoldiacrylat, Pentaerythrittriacrylat, Pentaerythrittetraacrylat, Trimethylolpropantriacrylat, Bisphenol A - dimethacrylat, Polyethylenglykoldimethacrylat und 1,6-Hexandioldi-acrylat.

Außer polyfunktionellen Acrylaten und Methacrylaten sind geeignete organische Materialien die folgenden Verbindungen:
1. Reaktionsprodukte von Polyisocyanaten, bevorzugt Diisocyanaten, wie Toluoldiisocyanat oder isocyanatendständigen Präpolymeren mit hydroxylhaltigen Acryl- oder Methacrylestem, wie 2-Hydroxyethylacrylat oder Hydroxypropylmethacrylat;
2. Umetherungsprodukte von polymeren Polyolen, wie hydroxylhaltigen Acrylharzen, Polyesterpolyolen, einschließlich von Polyestern, die sich von Lactonen ableiten und Polyetherpolyolenmit N-Alkoxymethylacrylamiden und -methacrylamiden.
3. Reaktionsprodukte von epoxyhaltigen harzartigen Materialien mit Acryl- oder Methacrylsäure. Die CH-aciden, enolisierbaren Cabonsäureester können weiterhin an höhermolekulare Verbindungen mit ungesättigten, durch eine Carbonylgruppe aktivierten Molekülanteilen addiert werden wie z. B. ungesättigte Polyester auf der Basis von Maleinsäure Fumarsäure, Itaconsäure oder ähnlichen Säuren.

Die Carbonsäureester, die mit dem organischen Material, das α, β-ethylenisch ungesättigte Molekülanteile in Konjugation mit Carbonylgruppen oder carbonylanalogen Gruppen enthält, zur Umsetzung gebracht werden, lassen sich mit der Formel 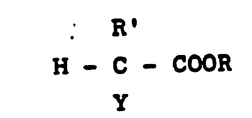 schematisieren, wobei R ein Alkyl- oder Alkoxyrest und R' Wasserstoff oder Alkyl- oder Arylrest oder eine Acetaminogruppe und Y eine elektronenziehende Gruppe der Art - CO - R, - COOR, - CN - CO - NH - R oder(CR'R")ₙ-COOR ist, wobei n - 0 bis 2 sein kann.

Ausgewählte Beispiele aus der genannten Klasse der CH-aktivierten Carbonsäureester sind Cyanessigsäureethylester, Acetessigsäureethylester, Isopropylacetessigsäureethylester, Cyclohexanon-2-carbonsäureethylester, Malonsäurediethylester, Malonsäuredipropylester, Butylmalonsäurediethylester, Acetaminomalonsäurediethylester und Acetessigsäure-2-ethoxyethylester.

Das Vernetzungsmittel (B) kann vorteilhaft auf folgende Weise hergestellt werden. Zunächst wird die zuvor beschriebene Carbonsäureester-Komponente vorgelegt und mit einem Katalysator versetzt. Als Katalysatoren können zahlreiche basische Stoffe eingesetzt werden. Beispiele hierfür sind Alkalimetallhydroxide oder -alkoholate, Pyridin und Natriumamid. Sodann wird das aktivierte CC-Doppelbindungen enthaltende Material, gegebenenfalls in inerter Verdünnung, langsam zugetropft. In vielen Fällen tritt bereits bei Zimmertemperatur eine exotherme Reaktion ein, die durch die Zutropfgeschwindigkeit unter Kontrolle gehalten werden kann. Zuweilen kann auch eine Kühlung des Reaktionsgemisches erforderlich sein. Anschließend wird noch so lange gerührt, bis keine Doppelbindungen im Reaktionsgemisch mehr nachweisbar sind oder bis die Viskosität des Produktes konstant bleibt.

Im Falle von schwächer reaktiven Systemen kann die Reaktionstemperatur angehoben werden, doch sollte sie günstigerweise unter 80°C gehalten werden, um einer basischen Zersetzung der Komponenten vorzubeugen. Bei stärker CH-aciden Carbonsäureestern, z.B. ß-Ketocarbonsäureestern, die spontan enolisieren, ist eine Katalyse wiederum verzichtbar.

Manche der genannten Carbonsäureester besitzen zwei aktive Wasserstoffatome, so daß eine Addition an zwei aktivierte CC-Doppelbindungen möglich ist unter Kettenverlängerung des Vernetzungsmittels. Durch Wahl geeigneter Stöchiometrieverhältnisse ist damit die Steuerung gewünschter Molekulargewichte möglich.

Die erfindungsgemäße Bindemittelmischung kann in feinteiliger, fester Form oder gelöst in einem organischen Lösungsmittel vorliegen.

Für die Elektrotauchlackierung ist es erforderlich, daß die Bindemittelmischung nach Protonisierung mit Säure in Form einer wäßrigen Lösung oder Dispersion vorliegt.

Die Wasserlöslichkeit der Bindemittelkomponente und/oder der Vernetzungskomponente wird durch Neutralisation der in ihnen enthaltenen primären, sekundären und/oder tertiären Aminogruppem mit Säuren bewirkt. Geeignete Säuren sind insbesondere organische Säuren, es kann jedoch auch beispielsweise Salzsäure oder Phosphorsäure eingesetzt werden. Bevorzugt werden die Aminogruppem mit Ameisensäure, Essigsäure, Malonsäure oder Zitronensäure neutralisiert.

Die genannten Säuren können auch verwendet werden, wenn die Einführung der solubilisierenden Gruppen für die Bindemittelkomponente und/oder die Vemetzerkomponente durch Anlagerung einer Ammoniumgruppe oder dem Salz einer Sulfid/Säure- oder Phosphin-Säuremischung an das Bindemittel oder den Vernetzer erfolgt.

Der Neutralisationsgrad der solubilisierenden Gruppen liegt, bezogen auf diese Gruppen, zwischen 0,2 bis 1,0 Äquivalent und bevorzugt zwischen 0,25 bis 0,6 Äquivalente Säure.

Die Neutralisation kann auf folgenden Wegen durchgeführt werden. Die Säure wird in Wasser, gegebenenfalls zusammen mit Dispergierhilfsmittel, vorgelegt und die Harzlösung wird bei Raumtemperatur oder gegebenenfalls bei erhöhten Temperaturen in das Wasser eingerührt. Die Säure kann aber auch direkt der Harzlösung zugegeben werden. Die neutralisierte Harzlösung kann nun in das Wasser eingerührt werden, gegebenenfalls kann man das Wasser auch langsam in die Harzlösung einarbeiten. Die Dispersion kann zur Steuerung ihrer Viskosität, der Abscheidespannung und des Verlaufs bis zu 20 % organische Lösungsmittel enthalten. Enthält der Ansatz durch das gewählte Darstellungsverfahren zuviel oder gar für die Eigenschaften schädliche Lösungsmittel, so kann man diese vor dem Dispergieren aus der Harzlösung herausdestillieren oder man destilliert sie aus der wäßrigen Dispersion ab. Vorteilhaft für die Summe aller Eigenschaften ist ein möglichst geringer Anteil an organischen Lösungsmitteln.

Der Festkörper eines Abscheidebades, das mit der er findungsgemäßen Dispersion angesetzt ist, beträgt 7-35 Gew.-%, bevorzugt aber 12 - 25 Gew.-%. Der pH-Wert des Abscheidebades liegt zwischen 4 und 8, vorzugsweise aber zwischen 5 und 7,5. Als Anoden des Abscheidebades werden nicht korrodierende Stahlanoden oder Graphitanoden verwendet. Die Temperatur des Badansatzes soll zwischen 15 bis 35°C, bevorzugt zwischen 20 und 30°C liegen. Die Abscheidedauer und -spannung werden so gewählt, daß die gewünschte Schichtstärke erreicht wird.

Nach der Abscheidung wird der beschichtete Gegenstand abgespült und ist zum Einbrennen bereit.

Unabhängig von dem Applikationsverfahren der auf Basis der erfindungsgemäßen Bindemittelmischung hergestellten Überzugsmittel erfolgt die Vernetzung des Lackfilms während des Einbrennens bei Temperaturen von 130 bis 200°C über eine Zeitdauer von 10 - 60 Minuten, bevorzugt bei 150 bis 180°C während 15 - 30 Minuten.

Die Vernetzungsreaktion kann durch geeignete Katalysatoren noch beschleunigt werden. Hierzu sind insbesondere geeignet Ammoniumverbindungen wie Benzyltrimethylammoniumhydroxid, Benzyltrimethylammoniumchlorid, Trimethylcetylammoniumbromid oder Tetraammoniumjodid und organische Zinnverbindungen wie Dibutylzinndilaurat und Eisen-III-acetylacetonat, Zinkacetat, Zink-2-ethyl-hexoat, Kobaltnaphthenat, Bleiacetat, Bleioctoat oder Butyltitanat. Wegen der hohen Reaktivität der Bindemittelkomponenten wird eine Beschleunigung der Vernetzungsreaktion bereits durch geringe Mengen Katalysator erreicht.

Die Pigmentierung erfolgt in wohlbekannter Weise. Hierbei werden die Pigmente sowie die üblichen Zusatzstoffe wie Füllstoffe, Korrosionsschutzinhibitoren und Antischaummittel (Komponente C) in einer der beiden Bindemittelkomponenten angemahlen. Als Mahlaggregate können z.B. Sandmühlen, Kugelmühlen oder Dreiwalzen verwendet werden. Die Komplettierung des Lackes kann wie allgemein bekannt erfolgen.

Die Einzelkomponenten A und B und gegebenenfalls die Komponente C können in Form ihrer konzentrierten Lösungen gemischt und gemeinsam dispergiert werden. Es ist aber auch möglich, die Komponenten A und B einzeln, wobei die Pigmente in A oder B angerieben sind, zu dispergieren und die Dispersion der Einzelkomponenten in dem erforderlichen Verhältnis zu vermischen.

Die Erfindung betrifft ferner ein Verfahren zum Herstellen von Überzügen durch Aufbringen eines Überzugsmittels auf ein Substrat in Form eines Filmes durch Einbrennen, wobei das Überzugsmittel eine Bindemittelmischung enthält, die dadurch gekennzeichnet ist, daß die Mischung
A) ein organisches Harz mit einem Hydroxylgruppengehalt von wenigstens 0,2 Äquivalent in 100 g Harz und
B) ein Vernetzungsmittel auf der Basis von Michael-Addukten CH-acider, enolisierbarer Carbonsäureester an organische Materialien mit a, β-ethylenisch ungesättigten Molekülanteilen, die in Konjugation zu einer Carbonylgruppe oder einer carbonylanalogen Gruppe stehen, enthält.

Vorteilhafte Ausgestaltungen des erfindungsgemäßen Verfahrens ergeben sich aus den Unteransprüchen 12 bis 21.

Die Erfindung betrifft weiterhin die Verwendung einer Bindemittelmischung für die Herstellung von Überzügen, die dadurch gekennzeichnet ist, daß die Mischung
A) ein organisches Harz mit einem Hydroxylgruppengehalt von wenigstens 0,2 Äquivalent in 100 g Harz und
B) ein Vernetzungsmittel auf der Basis von Michael-Addukten CH-acider, enolisierbarer Carbonsäureester an organische Materialien mit a, β-ethylenisch ungesättigten Molekülanteilen, die in Konjugation zu einer Carbonylgruppe oder einer carbonylanalogen Gruppe stehen, enthält.

Vorteilhafte Ausgestaltungen der erfindungsgemäßen Verwendung ergeben sich aus den Unteransprüchen 22 bis 33.

Im folgenden wird die Erfindung anhand von Ausführungsbeispielen näher erläutert.

### Beispiel 1

### Darstellung eines Vernetzungsmittels (Vernetzer 1)

In einem Reaktionsgefäß mit Rührer, Stickstoffeinlaß, Rückflußkühler, Tropftrichter und Innenthermometer werden 288 g Malonsäurediethylester zusammen mit 19 g ethanolischer Natriumethanolat-Lösung (3.8 Gew.-% Natrium) vorgelegt und auf 38°C erwärmt. Unter zeitweise gelindem Kühlen werden 226 g 1,6-Hexandioldiacrylat so zugetropft, daß die Innentemperatur 40°C nicht übersteigt. Anschließend wird noch ca. 4 Stunden bei 40°C bis zur Viskositätskonstanz gefahren. Es resultiert ein klares, farbloses Produkt mit einer ' Originalviskosität von 450 mPas (25° C).

### Beispiel 2

### Darstellung eines Vemetzungsmittels (Vernetzer II)

Analog zu Beispiel 1 erhält man Vernetzer 11 aus 417 g Malonsäurediethylester, 26 g ethanolischer Natriumethanolat-Lösung und 296 g Trimethylolpropantriacrylat.

### Beispiel 3

### Darstellung eines Vernetzungsmittels (Vernetzer 111)

### Vorprodukt A:

In einem 4 1-Reaktionsgefäß mit Rührer, Inertgaszufuhr, Rückflußkühler und Innenthermometer werden 468 g Acrylsäure und 1 700 g Versaticsäureglycidylester unter Zusatz von 10 g eines Chrom-Katalysators und von 1 g Hydrochinon vorsichtig auf 90°C erwärmt. Nach Abklingen der leichten Exothermie wird weiter bei dieser Temperatur gehalten, bis die Säurezahl kleiner als 1 mg KOH / g beträgt.

### Vernetzer III:

Zu einer vorgelegten Mischung aus 880 g Malonsäurediethylester und 87 g Natriumethanolat-Lösung werden analog zu Beispiel 1 2011 g des vorstehend beschriebenen Vorproduktes A per Tropftrichter zugetropft und zum Vernetzer III ausreagiert.

### Beispiel 4

### Darstellung eines Vernetzungsmittels (Vernetzer IV)

Nach dem im Beispiel 1 beschriebenen Herstellverfahren wird Vernetzer IV aus 338 g Acetessigsäureethylester und 296 g Trimethylolpropantriacrylat unter Katalyse von 19 g Natriumethanolat-Lösung erhalten.

### Beispiel 5

### Herstellung von hydroxylgruppenhaltigen Harzen

### Harz 1

In einem 4 1-Reaktor mit Rührer, aufgesetztem Rückflußkühler, Innenthermometer und Inertgaszuleitung werden 1786 g einer handelsüblichen Bisphenol A-Epoxyharzes mit einem Epoxidäquivalentgewicht (EEW) von 839 zusammen mit 62 g Xylol und 273 g Methylisobutylketon auf 80°C erwärmt. Nachdem der Inhalt homogenisiert ist, werden unter Rühren 208 g Diethanolamin zugegeben, wobei die Innentemperatur auf 110°C steigt. Nach Abklingen der exothermen Reaktion wird das Reaktionsgemisch noch ca. 2 Stunden bei 105°C gehalten, bis das EEW den Wert unendlich erreicht hat. Anschließend wird mit 163 g Hexylglykol ein Festkörper von 80 % eingestellt, gekühlt und ausgetragen.
Viskosität (25° C): 380 mPas (50 %ig in Ethylglykol)
MEQ-Base: 1,0 Milliäquivalente / g

### Harz 11

In einem wie zuvor beschriebenen Reaktor werden 1 944 g eines handelsüblichen Bisphenol A-Epoxyharzes mit einem EEW von 486 portionsweise bei 110°C aufgeschmolzen, mit 557 g Methylisobutylketon versetzt und 20 Min. bei 120°C durch Azeotropdestillation entwässert. Nach Abkühlen auf 60°C werden 139 g Hexylglykol zugegeben und 210 g Diethanolamin langsam zugetropft.

Man hält das Reaktionsgemisch bei dieser Temperatur, bis der Gesamtwert aus Epoxidgehalt und Amingehalt 1,9 Milliäquivalente /g erreicht ist.

Sodann gibt man 630 g eines Adduktes aus 1 mol Hexamethylendiamin und 2 mol Versaticsäureglycidylester zu und steigert die Temperatur innerhalb 1 Stunde auf 120°C. Man hält auf dieser Temperatur, bis der Gesamtwerkt aus Epoxid- und Amingehalt 1,5 Milliäquivalente/g erreicht hat, kühlt und trägt aus.
Viskosität (23°): 470 dPas (50 %ig in Ethylglykol)
MEQ-Base: 1,5 Milliäquivalente /g
Festkörper (1 Std. bei 130°C): 83 %

### Harz mit Hydroxylgruppen und primären Aminogruppen (Harz 111)

In einem wie zuvor beschriebenen Reaktor werden 1 770 g eines handelsüblichen Bisphenol A-Epoxyharzes (EEW = 885) in Gegenwart von 62 g Xylol bei 100°C aufgeschmolzen. Man verdünnt mit 219 g methylisobutylketon und kreist unter schwachem Vakuum während 15 Min. die Reste von Wasser aus. Unter schwachem Kühlen werden nacheinander 153 g eines Adduktes aus 1 mol Diethylentriamin und 2 mol Methylisobutylketon (70 %ig in Methylisobutylketon) und 118 g Methylethanol worauf die Temperatur auf 110°C steigt. Man hält noch weitere 2 Std. auf dieser Temperatur und verdünnt anschließend mit 160 g Hexylglykol.
Viskosität (25°C): 590 mPas (50 %ig in Ethylglykol)
MEQ-Base: 1,4 Milliäquivalente/ g
Festkörper: 82 % (1 Std. bei 130° C)

### Beispiel 6

Herstellung von festkörperreichen organisch gelösten Klarlacken und deren Hitzehärtung.

Die Harze I, II und II aus Beispiel 5 wurden mit den Vernetzungsmitteln (Vernetzer I-VI) aus den Beispielen 1-4 in den in der Tabelle angegebenen Gewichtsverhältnissen vermischt und homogenisiert. Mit Ethylglykol wurde ein Festkörper von 50 % eingestellt. Bei Harz 111 wurden zusätzlich 0,5 g H₂0 zugesetzt. Die so erhaltenen Klarlacke wurden gegebenenfalls katalysiert, auf zinkphophatierte Stahlbleche aufgerakelt (Naßfilmschichtdicke 50 pm) und 20 Min. lang unter den in nachfolgender Tabelle genannten Bedingungen eingebrannt. Man erhält in allen Fällen glatte, glänzende Filme.

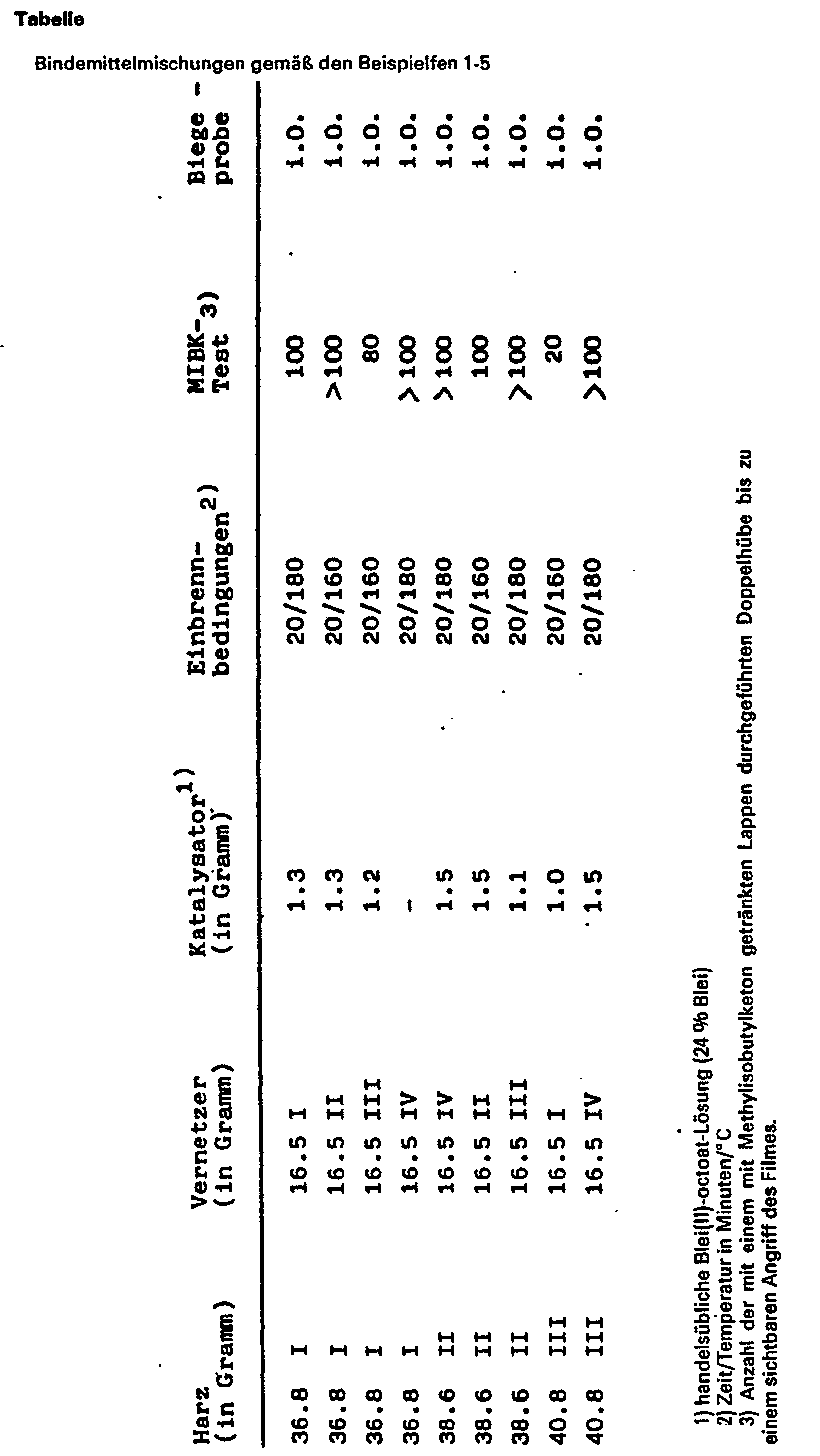

### Beispiel 7

### Herstellung einer Bindemitteldisperion

Es wird eine Bindemittelmischung hergestellt aus folgenden Komponenten:

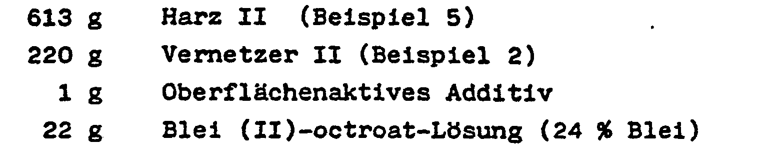

Die Bindemittelmischung wird kurzzeitig auf 60°C erwärmt und anschließend in ein Dispergierbad mit 14,2 g Eisessig und 618 g entionisiertem Wasser eingerührt. Man homogenisiert noch 1 Stunde, bevor mit 628 g entionisiertem Wasser langsam weiterverdünnt wird. Es resultiert eine feinteilige Dispersion, die anschließend im Vakuum vom Lösungsmittel befreit wird und die folgende Kenndaten aufweist:

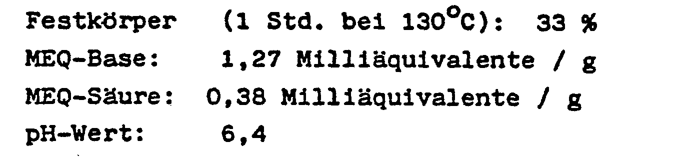

### Beispiel 8

### Darstellung einer grauen Pigmentpaste

Zu 953 Teilen eines handelsüblichen Epoxidharzes auf Basis Bisphenol A mit einem Epoxidäquivalentgewicht von 890 werden 800 Teile Butylglykol gegeben. Die Mischung wird auf 80°C erhitzt. In die Harzlösung werden dann 221 Teile eines Umsetzungsproduktes aus 101 Teilen Dimethylethanolamin und 120 Teilen 80 %iger, wäßriger Milchsäure gegeben. Man führt die Reaktion bei 80° C durch,bis die Säurezahl unter 1 gefallen ist.

1 800 Teile dieses Produktes werden mit 2 447 Teilen entionisiertem Wasser vorgelegt und mit 2 460 Teilen Ti0₂, 590 Teilen eines Extenders auf Basis Aluminiumsilikat, 135 Teile Bleisilikat, 37 Teilen Ruß und 25 Teilen Bleioctoat vermengt. Diese Mischung wird in einem Mahlaggregat auf eine Hegman-Feinheit von 5-7 zerkleinert. Danach gibt man 1 255 Teile entionisiertes Wasser zu, um die gewünschte Pastenkonsistenz zu erreichen. Diese graue Paste ist sehr lagerstabil.

### Beispiel 9

### Zubereitung eines Elektrotauchbades und Abscheidung

1 780 g der in Beispiel 9 beschriebenen Bindemitteldispersion und 456 g der in Beispiel 8 beschriebenen Pigmentpaste werden mit 1 805 g entionisiertem Wasser versetzt. Der Festkörper beträgt 18 %. Der pH-wert liegt bie 6,3. Mit Zinkphosphat behandelte Stahlbleche wurden 120 Sekunden lang einer Badtemperatur von 25° C beschichtet, (Abscheidspannung für 18-20 um Trockenfilmstärke: 280 V) mit Wasser gespült und 20 Minuten bei 180°C eingebrannt. Es resultierten glatte, gut haftende, lösemittelbeständige Filme mit folgendem Eigenschaftsbild:

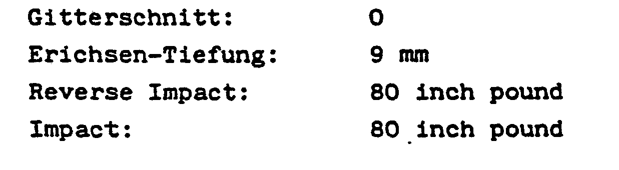

## Patentansprüche

1. Hitzehärtbare Bindemittelmischung, dadurch gekennzeichnet, daß sie
A) ein organisches Harz mit einem Hydroxylgruppengehalt von wenigetens 0,2 Äquivalent in 100 g Harz und
B) ein Vernetzungsmittel auf der Basis von Michael-Addukten CH-acider, enolisierbarer Carbonsäureester an organische Materialien mit α,ß -ethylenisch ungesättigten Molekülanteilen, die in Konjugation zu einer . Carbonylgruppe oder einer carbonylanalogen Gruppe stehen,
enthält.

2. Bindemittelmischung nach Anspruch 1, dadurch gekennzeichnet, daß das Vemetzungsmittel (B) Struktureinheiten der allgemeinen Formel 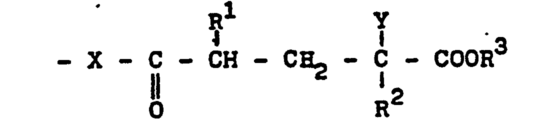 enthält, wobei R^{l} - H, Alkyl-, Aryl
R2 - H, Alkyl-, Aryl-,- 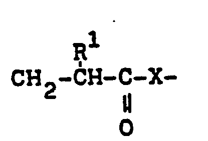
R³ - Alkyl-, Aryl-, -CH₂-CH₂-0-R⁴
X - 0, NH 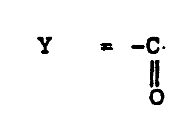
-R⁴, -CN, -(CR¹₂)ₙ -COOR³
mit n - o bis 11
bedeuten. R⁴ - Alkyl, Aryl

3. Bindemittelmischung nach Anspruch 1, dadurch gekennzeichnet, daß sie zusätzlich zu den Komponenten A und B als Komponente C Pigmente, Füllstoffe, Vernetzungskatalysatoren, Korrosionschutzinhibitoren und weitere Lackhilfsmittel enthält.

4. Bindemittelmischung nach Anspruch 1 bis 3, dadurch gekennzeichnet, daß der Anteil der Komponente A 50-95 Gew.-% und der der Komponente B 5 - 50 Gew.-% betragen, wobei die Summe der Komponenten A und B 100 % beträgt.

5. Bindemittelmischung nach Anspruch 1 bis 4, dadurch gekennzeichnet, daß die Komponente A eine zahlenmittlere Molmasse von 1000 - 20 000 aufweist.

6. Bindemittelmischung nach Anspruch 1 bis 5, dadurch gekennzeichnet, daß die Komponente A zusätzlich zu den Hydroxylgruppen Aminogruppen oder Ammoniumgruppen enthält.

7. Bindemittelmischung nach Anspruch 1 bis 6, dadurch gekennzeichnet, daß die Komponente B eine zahlenmittlere Molmasse von 200 - 10 000 aufweist.

8. Bindemittelmischung nach Anspruch 1 bis 7, dadurch gekennzeichnet, daß sie in feinteiliger, fester Form vorliegt.

9. Bindemittelmischung nach Anspruch 1 bis 7, dadurch gekennzeichnet, daß sie gelöst in einem organischen Lösungsmittel vorliegt.

10. Bindemittelmischung nach Anspruch 5 bis 7, dadurch gekennzeichnet, daß sie nach Protonisierung mit Säure in Form einer wäßrigen Lösung oder Disperion vorliegt.

11. Verfahren zum Herstellen von Überzügen durch Aufbringen eines Überzugsmittels auf ein Substrat in Form eines Filmes und anschließendes Aushärten des Filmes durch Einbrennen, wobei das Überzugsmittel eine Bindemittelmischung enthält, dadurch gekennzeichnet, daß die Mischung
A) ein organisches Harz mit einem Hydroxylgruppengehalt von wenigstens 0,2 Äquivalent in 100 g Harz und
B) ein Vernetzungsmittel auf der von Michael-Addukten CH-acider, enolisierbarer Carbonsäureester an organische Materialien mit a, β-ethylenisch ungesättigten Molekülanteilen, die in Konjugation zu einer Carbonylgruppe oder einer carbonylanalogen Gruppe stehen, enthält.

12. Verfahren nach Anspruch 11, dadurch gekennzeichnet, daß die Mischung zusätzlich zu den Komponenten A und B als Komponente C Pigmente, Füllstoffe, Vernetzungskatalysatoren, Korrosionsschutzinhibitoren und weitere Lackhilfsmittel enthält..

13. Verfahren nach Anspruch 11 bis 12, dadurch gekennzeichnet, daß der Anteil der Komponente A 50-95 Gew.-% und der der Komponente B 5 - 50 Gew.-% betragen, wobei die Summe der Komponenten A und B 100 % beträgt.

14. Verfahren nach Anspruch 11 bis 13, dadurch gekennzeichnet, daß die Komponente A eine zahlenmittlere Molmasse von 1000 - 20 000 aufweist.

15. Verfahren nach Anspruch 11 bis 14, dadurch gekennzeichnet, daß die Komponente A zusätzlich zu den Hydroxylgruppen Aminogruppen oder Ammoniumgruppen enthält.

16. Verfahren nach Anspruch 11 bis 15, dadurch gekennzeichnet, daß die Komponente B eine zahlenmittlere Molmasse von 200 -10 000 aufweist.

17. Verfahren nach Anspruch 11 bis 16, dadurch gekennzeichnet, daß das Überzugsmittel in feinteiliger, fester Form vorliegt.

18. Verfahren nach Anspruch 17, dadurch gekennzeichnet, daß das Aufbringen des Überzugsmittels durch eine elektrostatische Pulversprüheinrichtung erfolgt.

19. Verfahren nach Anspruch 11 bis 16, dadurch gekennzeichnet, daß die Bindemittelmischung gelöst in einem organischen Lösungsmittel vorliegt.

20. Verfahren nach Anspruch 19, dadurch gekennzeichnet, daß das Aufbringen des Überzugsmittels durch Spritzen, Tauchen, Fluten, Walzen, Rakeln oder dergleichen erfolgt.

21. Verfahren nach Anspruch 15 und 16, dadurch gekennzeichnet, daß ein elektrisch leitendes Substrat in ein wäßriges Bad des mindestens teilweise durch Säure neutralisierten Überzugsmittels, das gegebenenfalls zusätzlich organische Lösungsmittel enthält, eingetaucht und als Kathode geschaltet wird, der Film mittels Gleichstrom auf dem Substrat abgeschieden wird, das Substrat aus dem Bad entfernt wird und der Film durch Einbrennen gehärtet wird.

22. Verwendung einer Bindemittelmischung für die Herstellung von Überzügen, dadurch gekennzeichnet, daß die Mischung
A) ein organisches Harz mit einem Hydroxylgruppengehalt von wenigstens 0,2 Äquivalent in 100 g Harz und
B) ein Vernetzungsmittel auf der Basis von Michael-Addukten CH-acider, enolisierbarer Carbonsäureester an organische Materialien mit a, βethylenisch ungesättigten Molekülanteilen, die in Konjugation zu einer Carbonylgruppe oder einer carbonylanalogen Gruppe stehen, enthält.

23. Verwendung nach Abspruch -22, dadurch gekennzeichnet, daß die Mischung zusätzlich zu den Komponenten A und B als Komponente C Pigmente, Füllstoffe, Vernetzungskatalysatoren, Korrosionsschutzinhibitoren und weitere Lackhilfsmittel enthält.

24. Verwendung nach Anspruch 22 und 23, dadurch gekennzeichnet, daß der Anteil der Komponente A 50-95 Gew.-% und der der Komponente B 5 - 50 Gew.- % betragen, wobei die Summe der Komponenten A und B 100 % beträgt.

25. Verwendung nach Anspruch 22 bis 24, dadurch gekennzeichnet, daß die Komponente A eine zahlenmittlere Molmasse von 1 000 - 20 000 aufweist.

26. Verwendung nach Anspruch 22 bis 25, dadurch gekennzeichnet daß die Komponente A zusätzlich zu den Hydroxylgruppen Aminogruppen oder Ammoniumgruppen enthält.

27. Verwendung nach Anspruch 22 bis 26, dadurch gekennzeichnet, daß die Komponente B eine zahlenmittlere Molmasse von 200 -10 000 aufweist.

28. Verwendung nach Anspruch 22 bis 27, dadurch gekennzeichnet, daß die Bindemittelmischung in feinteiliger, fester Form vorliegt.

29. Verwendung der Bindemittelmischung nach Anspruch 28 für Pulverlacke.

30. Verwendung nach Anspruch 22 bis 27, dadurch gekennzeichnet, daß die Bindemittelmischung gelöst in einem organischen Lösungsmittel vorliegt.

31. Verwendung der Bindemittelmischung nach Anspruch 30 für Einbrennlacke.

32. Verwendung nach Anspruch 26 und 27, dadurch gekennzeichnet, daß die Bindemittelmischung nach Protonisierung mit Säure in Form einer wäßrigen Lösung oder Dispersion vorliegt.

33. Verwendung der Bindemittelmischung nach Anspruch 32 für die kathodische Elektrotauchlackierung.

## Claims

1. A heat-hardenable binder mixture which contains
A) an organic resin having a hydroxyl group content of at least 0.2 equivalent in 100 g of resin and
B) a crosslinking agent based on Michael adducts of CH-acidic enolizable carboxylic acid esters on organic materials having a, fJ-ethylenically unsaturated molecular moieties conjugated with a carbonyl group or a carbonyl group analog.

2. A binder mixture as claimed in claim 1, wherein the crosslinking agent (B) contains structural units of the formula 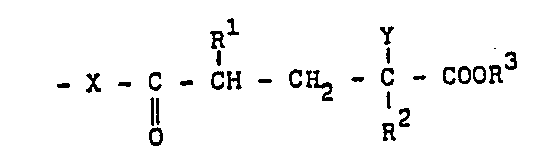 where
R¹ =H, alkyl or aryl,
R2 - H, alkyl, aryl or 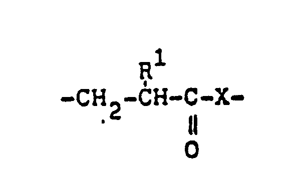
R³ - alkyl, aryl or -CH₂-CH₂-0-R⁴,
X=O or NH, 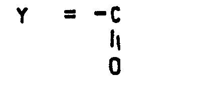
-R⁴, -CN or -(CR¹2)n-COOR³
where n - 0 to 11,
R4 - alkyl or aryl.

3. A binder mixture as claimed in claim 1, which, in addition to components A and B, contains, as component C, pigments, fillers, crosslinking catalysts, corrosion inhibitors and further paint assistants.

4. A binder mixture as claimed in claims 1 to 3 wherein the proportion of component A is 50 - 95% by weight and that of component B 5 - 50% by weight, the proportions of components A and B adding up to 100%.

5. A binder mixture as claimed in claims 1 to 4, wherein component A has a number average molecular weight of 1000 - 20,000.

6. A binder mixture as claimed in claims 1 to 5, wherein component A, in addition to the hydroxyl groups, contains amino groups or ammonium groups.

7. A binder mixture as claimed in claims 1 to 6, wherein component B has a number average molecular weight of 200 -10,000.

8. A binder mixture as claimed in claims 1 to 7, which is in finely divided solid form.

9. A binder mixture as claimed in claims 1 to 7, which is in the form of a solution in an organic solvent.

10. A binder mixture as claimed in claims 5 to 7, which, following protonation with acid, is in the form of an aqueous solution or dispersion.

11. A process for preparing surface coatings by applying a coating agent to a substrate in the form of a film and then hardening the film by baking, the coating agent containing a binder mixture, wherein the binder mixture contains
A) an organic resin having a hydroxyl group content of at least 0.2 equivalent in 100 g of resin and
B) a crosslinking agent based on Michael adducts of CH-acidic enolizable carboxylic acid esters on organic materials having a, p-ethylenically unsaturated molecular moieties conjugated with a carbonyl group or a carbonyl group analog.

12. A process as claimed in claim 11, wherein the mixture, in addition to components A and B, contains as component C pigments, fillers, crosslinking catalysts, corrosion inhibitors and further paint assistants.

13. A process as claimed in claims 11 and 12, wherein the proportion of component A is 50 - 95% by weight and that of component B 5 - 50% by weight, the proportions of components A and B adding up to 100%.

14. A process as claimed in claims 11 to 13, wherein component A has a number average molecular weight of 1,000 - 20,000.

15. A process as claimed in claims 11 to 14, wherein component A, in addition to the hydroxyl groups, contains amino groups or ammonium groups.

. 16. A process as claimed in claims 11 to 15, wherein component B has a number average molecular weight of 200-10,000.

17. A process as claimed in claims 11 to 16, wherein the coating agent is in finely divided solid form.

18. A process as claimed in claim 17, wherein the coating agent is applied by an electrostatic powder spray device.

19. A process as claimed in claims 11 to 16, wherein the binder mixture is in the form of a solution in an organic solvent.

20. A process as claimed in claim 19, wherein the coating agent is applied by spraying, dipping, flow-coating, roll-coating, knife-coating or the like.

21. A process as claimed in claims 15 and 16, wherein an electrically conductive substrate is dipped into an aqueous bath of the at least partially acid-neutralized coating agent, which may additionally contain organic solvents, and is connected as the cathode, the film is deposited on the substrate by means of direct current, the substrate is removed from the bath, and the film is hardened by baking.

22. The use of a binder mixture for the preparation of surface coatings, wherein the mixture contains
A) an organic resin having a hydroxyl group content of at least 0.2 equivalent in 100 g of resin and
B) a crosslinking agent based on Michael adducts of CH-acidic enolizable carboxylic acid esters on organic materials having a, p-ethylenically unsaturated molecular moieties conjugated with a carbonyl group or a carbonyl group analog.

23. The use as claimed in claim 22, wherein the mixture, in addition to components A and B, contains as component C pigments, fillers, crosslinking catalysts, corrosion inhibitors and further paint assistants.

24. The use as claimed in claims 22 and 23, wherein the proportion of component A is 50 - 95% by weight and that of component B 5 - 50% by weight, the proportions of components A and B adding up to 100%.

25. The use as claimed in claims 22 to 24, wherein component A has a number average molecular weight of 1,000 - 20,000.

26. The use as claimed in claims 22 to 25, wherein component A, in addition to the hydroxyl groups, contains amino groups or ammonium groups.

27. The use as claimed in claims 22 to 26, wherein component B has a number average molecular weight of 200 - 10,000.

28. The use as claimed in claims 22 to 27, wherein the binder mixture is in finely divided, solid form.

29. The use of the binder mixture as claimed in claim 28, for powder finishes.

30. The use according to claims 22 to 27, wherein the binder mixture is in the form of a solution in an organic solvent.

31. The use of the binder mixture as claimed in claim 30, for baking finishes.

32. The use according to claims 26 and 27, wherein the binder mixture, after protonation with acid, is in the form of an aqueous solution or dispersion.

33. The use of the binder mixture as claimed in claim 32, for cathodic electropainting.

## Revendications

1.- Melange liant thermodurcissable, caractérisé par le fait qu'il renferme:
A) une résine organique ayant une teneur en groupe hydroxyle d'au moins 0,2 équivalent dans 100 g de résine; et
B) un agent de réticulation à base de produits d'addition de Michael d'esters carboxyliques énolisables et à CH acide, sur des substances organiques comportant des parties de molécule à insaturation a, P-éthylénique; qui sont en conjugaison avec un groupe carboxyle ou un groupe analogue à un groupe carboxyle.

2.- Mélange liant selon la revendication 1, caractérisé par le fait que l'agent de réticulation (B) renferme des unités structurales de formule générale: 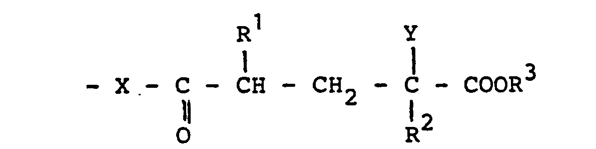 dans laquelle:
R¹ = H, alkyle, aryle
R² = H, alkyle, aryle, -CH₂ 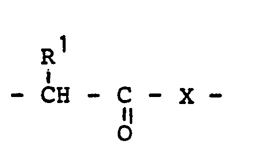
^{R3 = alkyle,} aryle, ^{-CH2 - CH2 - 0 -} _{R4}
X = 0. N_{H} 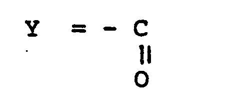
- R⁴, -CN. -(CR¹₂), -COOR³
avec n = 0 à 11
R⁴ - alkyle, aryle

3. Mélange liant selon la revendication 1, caractérisé par le fait qu'il renferme, en plus des composants A et B, comme composant C, des pigments, des charges, des catalyseurs de réticulation, des agents anticorrosifs et d'autres adjuvants pour vernis.

4. Mélange liant selon l'une des revendications 1 à 3, caractérisé par le fait que la partie formée par le composant A s'élève à 59-95% en poids, et celle formée par le composant B, à 5-50% en poids, la somme des composants A et B s'élevant à 100%. ,

5. Mélange liant selon l'une des revendications 1 à 4, caractérisé par le fait que le composant A présente une masse molaire moyenne en nombre de 1000-20000.

6. Mélange liant selon l'une des revendications 1 à 5, caractérisé par le fait que le composant A renferme, en plus des groupes hydroxyle, des groupes amino ou des groupes ammonium.

7. Mélange liant selon l'une des revendications 1 à 6, caractérisé par le fait que le composant B présente une masse molaire moyenne en nombre de 200-10000.

8. Mélange liant selon l'une des revendications 1 à 7, caractérisé par le fait qu'il se présente sous une forme solide, pulvérulente.

9. Mélange liant selon l'une des revendications 1 à 7, caractérisé par le fait qu'il se présente à l'état dissous dans un solvant organique.

10. Mélange liant selon l'une des revendications 5 à 7, caractérisé par le fait qu'il se présente, après protonation par un acide, sous la forme d'une solution ou dispersion aqueuse.

11. Procédé de préparation de revêtements par application d'un agent de revêtement sur un substrat sous la forme d'un film et par durcissement subséquent du film par cuisson, suivant lequel l'agent de revêtement contient un mélange liant, caractérisé par le fait que le mélange renferme
A) une résine organique ayant une teneur en groupes hydroxyle d'au moins 0,2 équivalent dans 100 g de résine; et
B) un agent de réticulation à base de produits d'addition de Michael d'esters carboxyliques énolisables et à CH acide, sur des substances organiques comportant des parties de molécule à insaturation a, P-éthylénique, qui sont en conjugaison avec un groupe carbonyle ou un groupe analogue à un groupe carbonyle.

12. Procédé selon la revendication 11, caractérisé par le fait que le mélange renferme, en plus des composants A et B, comme composant C, des pigments, des charges, des catalyseurs de réticulation, des agents anticorrosifs et d'autres adjuvants pour vernis.

13. Procédé selon la revendication 11 ou 12, caractérisé par le fait que la partie formée par le composant A s'élève à 50-95% en poids, et celle formée par le composant B, à 5-50% en poids, la somme des composants A et B s'élevant à 100%.

14. Procédé selon l'une des revendications 11 à 13, caractérisé par le fait que le composant A présente une masse molaire moyenne en nombre de 1000-20000.

15. Procédé selon l'une des revendications 11 à 14, caractérisé par le fait que le composant A renferme, en plus des groupes hydroxyle, des groupes amino ou des groupes ammonium.

16. Procédé selon l'une des revendications 11 à 15, caractérise par le fait que le composant B présente une masse molaire moyenne en nombre de 200-10000.

17. Procédé selon l'une des revendications 11 à 16, caractérisé par le fait que l'agent de revêtement se présente sous une forme solide, pulvérulente.

18. Procédé selon la revendication 17, caractérisé par le fait que l'application de l'agent de revêtement est effectuée par un dispositif de pulvérisation de poudres électrostatique.

19. Procédé selon l'une des revendications 11 à 16, caractérisé par le fait que le mélange liant se présente à l'état dissous dans un solvant organique.

20. Procédé selon la revendication 19, caractérisé par le fait que l'application du revêtement a lieu par pulvérisation, immersion, arrosage, cylindrage, raclage ou similaires.

21. Procédé selon l'une des revendications 15 et 16, caractérisé par le fait que l'on plonge un substrat électriquement conducteur dans un bain aqueux de l'agent de revêtement qui est au moins partiellement neutralisé par un acide et qui renferme le cas échéant, en plus, un solvant organique, et qu'on le monte comme cathode, que l'on provoque le dépôt du film sur le substrat au moyen d'un courant électrique, que l'on retire le substrat du bain et que l'on fait durcir le film par cuisson.

22. Utilisation d'un mélange liant pour la fabrication de revêtements, caractérisée par le fait que le mélange renferme:
A) une résine organique ayant une teneur en groupes hydroxyle d'au moins 0,2 équivalent dans 100 g de résine; et
B) un agent de réticulation à base de produits d'addition de Michael d'esters carboxyliques énolisables et à CH acide, sur des substances organiques comportant des parties de molécule à insaturation a, P-éthylénique, qui sont en conjugaison avec un groupe carbonyle ou un groupe analogue à un groupe carbonyle.

23. Utilisation selon la revendication 22, caractérisée par le fait que le mélange renferme, en plus des composants A et B, comme composant C, des pigments, des charges, des catalyseurs de réticulation, des agents anticorrosifs et d'autres adjuvants pour vernis.

24. Utilisation selon l'une des revendications 22 et 23, caractérisée par le fait que la partie formée par le composant A s'éléve à 50-95% en poids et que celle formée par le composant B, à 5-50% en poids, la somme des composants A et B s'élevant à 1009%

25. Utilisation selon l'une des revendications 22 à 24, caractérisée par le fait que le composant A présente une masse molaire moyenne en nombre de 1000-20000.

26. Utilisation selon l'une des revendications 22 à 25, caractérisée par le fait que le composant A renferme, en plus des groupes hydroxyle, des groupes amino ou des groupes ammonium.

27. Utilisation selon l'une des revendications 22 à 26, caractérisée par le fait que le composant B présente une masse molaire moyenne en nombre de 200-10000.

28. Utilisation selon l'une des revendications 22 à 27, caractérisée par le fait que le mélange liant se présente sous une forme solide, pulvérulente.

29. Utilisation du mélange liant selon la revendication 28 comme vernis en poudre.

30. Utilisation selon l'une des revendications 22 à 27, caractérisée par le fait que le mélange liant se présente à l'état dissous dans un solvant organique.

31. Utilisation du mélange liant selon la revendication 30, comme vernis d'application à chaud.

32. Utilisation selon l'une des revendications 26 à 27, caractérisée par le fait que le mélange liant se présente, après protonation par un acide, sous la forme d'une solution ou dispersion aqueuse.

33. Utilisation du mélange liant selon la revendication 32 pour le revêtement par électrodéposition cathodique.
